# FASCICULE DE BREVET EUROPEEN

(11) **EP 3 176 852 B1**
(45) Date de publication et mention de la délivrance du brevet: **04.12.2019**
(21) Numéro de dépôt: 16201483.1
(22) Date de dépôt: 30.11.2016
(51) Int. Cl.: H01M 2/10, H01M 2/20, H01M 10/052, H01R 13/24, H01R 31/02

(54) **DISPOSITIF DE CONNEXION POUR BATTERIE**
ANSCHLUSSVORRICHTUNG FÜR BATTERIE
BATTERY CONNECTION DEVICE

(30) Priorité: 01.12.2015 FR 1561658
(43) Date de publication de la demande: 07.06.2017
(73) Titulaire: COMMISSARIAT À L'ÉNERGIE ATOMIQUE ET AUX ÉNERGIES ALTERNATIVES, 75015 Paris (FR)
(72) Inventeur: DE PAOLI, Lionel, 69460 Odenas (FR)
(74) Mandataire: Cabinet Beaumont

(56) Documents cités:
- EP-A1- 2 871 695
- JP-A- 2009 252 652
- US-A1- 2012 231 320

## Description

### Domaine

La présente description concerne un dispositif de connexion électrique pour une batterie, c'est-à-dire un ensemble d'éléments de stockage d'énergie, également appelés accumulateurs, connectés en série et/ou en parallèle.

### Exposé de l'art antérieur

Le montage en série et/ou en parallèle des accumulateurs d'une batterie permet d'atteindre les niveaux souhaités de tension et de puissance électrique. Des circuits électroniques peuvent être connectés aux accumulateurs. Le système comprenant la batterie d'accumulateurs et les circuits électroniques est appelé généralement ensemble-batterie ou pack batterie.

Un ensemble-batterie est généralement divisé en modules, chaque module comprenant un groupe d'accumulateurs connectés en parallèle et/ou en série. Les modules sont connectés les uns aux autres en série et/ou en parallèle. Le nombre d'accumulateurs par module est choisi notamment de façon à limiter la tension aux bornes de chaque module et de façon à limiter l'encombrement de chaque module.

De façon connue, les liaisons électriques entre accumulateurs d'un module peuvent être réalisées en utilisant des pièces métalliques dédiées ou des câbles électriques fixés par exemple par vissage, rivetage ou soudure. De tels modules d'accumulateurs sont connus des documents US2012/0231320A1 ou EP2871695A1.

Il peut être souhaitable de pouvoir extraire les accumulateurs d'un module notamment pour des opérations de maintenance ou pour recycler les accumulateurs. Ceci ne peut généralement pas être réalisé de façon simple et rapide lorsque les pièces métalliques de connexion ou les câbles électriques sont fixés aux modules par des liaisons indémontables, notamment par soudure.

En outre, avec les dispositifs de connexion des accumulateurs les uns aux autres décrits précédemment, il peut être difficile d'assurer que la réalisation d'opérations de montage et de démontage est sans danger pour un opérateur. C'est en particulier le cas lorsque les opérations de maintenance sont réalisées sous tension lorsqu'il n'est pas souhaitable de décharger complètement les accumulateurs, notamment pour des accumulateurs de type lithium.

L'assemblage des modules par des câbles électriques présente, en outre, l'inconvénient d'être sensible aux vibrations. Il existe alors un risque de court-circuit dans le cas de rupture d'un câble électrique ou dans le cas de détérioration de l'isolant du câble.

### Résumé

Un mode de réalisation vise à pallier tout ou partie des inconvénients liés à l'utilisation des dispositifs de connexion connus des accumulateurs d'un module de batterie.

Un mode de réalisation vise à homogénéiser le courant entre les accumulateurs de chaque module de la batterie.

Un mode de réalisation vise un procédé de montage et de démontage des accumulateurs d'un module de batterie qui est simple, rapide et sécurisé.

Un mode de réalisation vise à assurer que les opérations de montage et de démontage sont sans danger pour un opérateur.

Ainsi, un mode de réalisation prévoit un module de batterie comprenant au moins des premier et deuxième groupes d'accumulateurs comprenant chacun au moins deux accumulateurs, chaque accumulateur comprenant une première borne et une deuxième borne, et au moins un dispositif de connexion électrique de toutes les premières bornes des accumulateurs du premier groupe à toutes les deuxièmes bornes des accumulateurs du deuxième groupe, le dispositif de connexion comprenant :
un élément conducteur électriquement, monobloc ou comprenant plusieurs pièces, au contact de toutes les premières bornes des accumulateurs du premier groupe et de toutes les deuxièmes bornes des accumulateurs du deuxième groupe et non fixé aux accumulateurs ;
un élément déformable élastiquement intégré à l'élément conducteur électriquement ou au contact de l'élément conducteur électriquement ; et
un élément de guidage en un matériau isolant électriquement adapté à comprimer l'élément déformable élastiquement contre les accumulateurs.

Selon un mode de réalisation, pour chaque première borne des accumulateurs du premier groupe, la résistance électrique entre cette première borne et la deuxième borne la plus proche des accumulateurs du deuxième groupe est identique à 10 % près.

Selon un mode de réalisation, l'élément déformable élastiquement comprend des connecteurs électriques à contacts multiples.

Selon un mode de réalisation, l'élément conducteur électriquement comprend une plaque ondulée ou une lame ondulée au contact de toutes les premières bornes des accumulateurs du premier groupe et de toutes les deuxièmes bornes des accumulateurs du deuxième groupe et non fixée aux accumulateurs.

Selon un mode de réalisation, la lame ondulée s'étend en zigzags.

Selon un mode de réalisation, l'élément conducteur électriquement comprend une plaque plane comprenant des doigts déformables élastiquement en contact avec les premières bornes des accumulateurs du premier groupe et les deuxièmes bornes des accumulateurs du deuxième groupe.

Selon un mode de réalisation, l'élément de guidage recouvre complètement l'élément conducteur électriquement et l'élément déformable élastiquement du côté opposé aux accumulateurs.

Selon un mode de réalisation, le module comprend un système de maintien des accumulateurs et le dispositif de connexion électrique est relié au système de maintien par une liaison glissière.

Selon un mode de réalisation, le module comprend, en outre, un boîtier contenant les premier et deuxième groupes d'accumulateurs, le dispositif de connexion étant pris en sandwich entre le boîtier et les accumulateurs.

Selon un mode de réalisation, l'élément de guidage est, en outre, interposé entre chaque paire d'accumulateurs adjacents.

Selon un mode de réalisation, l'élément conducteur électriquement comprend une portion courbe au contact de chaque première borne et de chaque deuxième borne. Selon un mode de réalisation, la liaison entre l'élément conducteur et chaque première borne et entre l'élément conducteur et chaque deuxième borne ne correspond pas à une liaison par mise en contact de deux surfaces planes.

Selon un mode de réalisation, la liaison entre l'élément conducteur électriquement et chaque première borne et entre l'élément conducteur électriquement et chaque deuxième borne est seulement une liaison par appui sous pression.

Un autre mode de réalisation prévoit un procédé de montage du module de batterie tel que défini précédemment, comprenant l'application du dispositif de connexion électrique contre les accumulateurs de façon à comprimer l'élément déformable élastiquement et maintenir en appui l'élément conducteur électriquement au contact de toutes les premières bornes des accumulateurs du premier groupe et de toutes les deuxièmes bornes des accumulateurs du deuxième groupe.

Selon un mode de réalisation, le procédé comprend les étapes suivantes :
placer le dispositif de connexion électrique contre les accumulateurs ;
empêcher le retrait du dispositif de connexion électrique ; et
introduire le dispositif dans un boîtier, le boîtier venant appliquer le dispositif de connexion électrique contre les accumulateurs de façon à comprimer l'élément déformable élastiquement.

Un autre mode de réalisation prévoit un procédé de démontage du module de batterie comprenant l'éloignement du dispositif de connexion électrique des accumulateurs de façon à détendre l'élément déformable élastiquement et écarter l'élément conducteur électriquement de toutes les premières bornes des accumulateurs du premier groupe et de toutes les deuxièmes bornes des accumulateurs du deuxième groupe

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un schéma électrique équivalent d'un module d'un ensemble-batterie ;
la figure 2 est une vue en perspective, partielle et schématique, d'un exemple d'un module d'un ensemble-batterie ;
la figure 3 est une vue en perspective, partielle et schématique, d'un mode de réalisation d'un module d'un ensemble-batterie ;
la figure 4 est une coupe, partielle et schématique, du module représenté en figure 3 ;
les figures 5 et 6 sont respectivement une vue en perspective et une vue de côté, partielles et schématiques, d'un connecteur à lamelles du dispositif de connexion représenté sur les figures 3 et 4 ;
les figures 7 et 8 sont des coupes, partielles et schématiques, d'autres modes de réalisation d'un module d'un ensemble-batterie ;
la figure 9 est une vue en perspective, partielle et schématique, d'un autre mode de réalisation d'un module d'un ensemble-batterie ;
la figure 10 est une coupe, partielle et schématique, du module représenté en figure 9 ;
la figure 11 est une vue en perspective, partielle et schématique, d'un autre mode de réalisation d'un module d'un ensemble-batterie ;
la figure 12 est une coupe, partielle et schématique, du module représenté en figure 11 ;
les figures 13 et 14 sont chacune une vue en perspective, partielle et schématique, du module représenté sur les figures 3 et 4 illustrant un mode de réalisation d'un procédé de montage du module ;
la figure 15 est une vue en perspective, partielle et schématique, d'un autre mode de réalisation d'un module d'un ensemble-batterie ;
la figure 16 est une coupe, partielle et schématique, du module représenté en figure 15 ; et
la figure 17 est une coupe, partielle et schématique, d'un autre mode de réalisation d'un module d'un ensemble-batterie.

### Description détaillée

De mêmes éléments ont été désignés par de mêmes références aux différentes figures qui ont été tracées sans respect d'échelle. De plus, seuls les étapes et éléments utiles à la compréhension des modes de réalisation décrits sont représentés et détaillés. En particulier, la constitution des accumulateurs n'a pas été illustrée, les modes de réalisation étant compatibles avec les accumulateurs usuels. De plus, la réalisation des circuits électroniques connectés aux accumulateurs n'a pas non plus été détaillée, les modes de réalisation décrits étant là encore compatibles avec les circuits électroniques usuels destinés à des ensembles-batteries. En outre, on fait référence à des positions (supérieure, inférieure, latérale, etc.) en se basant de façon arbitraire sur l'orientation des figures. Dans la suite de la description, lorsqu'une première pièce est dite fixée à une deuxième pièce, cela signifie qu'il y a une liaison rigide entre la première pièce et la deuxième pièce, la première pièce pouvant être au contact direct de la deuxième pièce ou pouvant être reliée à la deuxième pièce par une troisième pièce interposée entre la première pièce et la deuxième pièce.

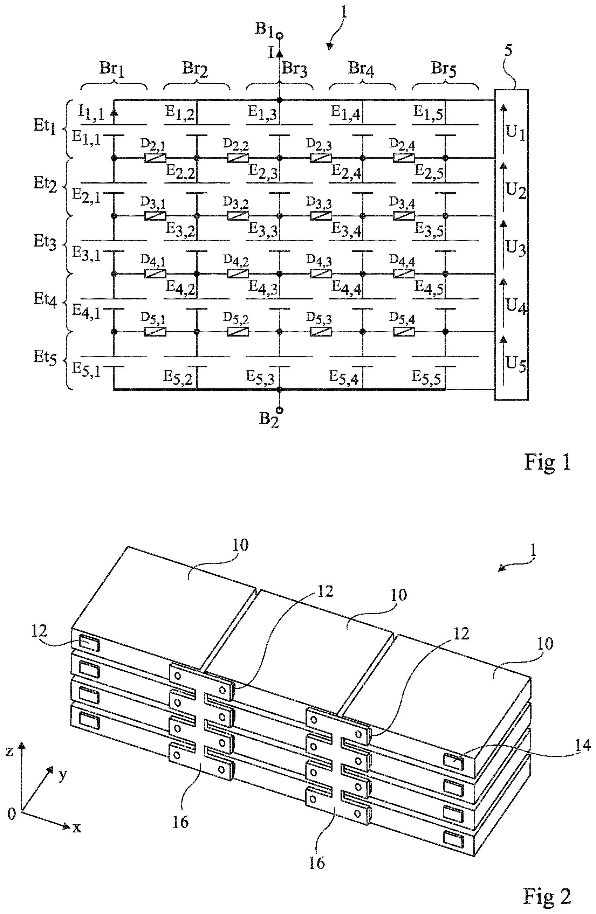

La figure 1 représente un schéma électrique équivalent d'un module 1 d'un ensemble-batterie. Un ensemble-batterie peut comprendre plusieurs modules 1 connectés les uns aux autres en série et/ou en parallèle.

Le module 1 comprend M*N accumulateurs E_{i,j} répartis selon M étages, ou rangées, Etᵢ et N branches Brⱼ, où i est un nombre entier qui varie de 1 à M et j est un nombre entier qui varie de 1 à N. Dans le présent exemple, M et N son égaux à 5. Il peut s'agir d'accumulateurs du type lithium-ion. Les accumulateurs d'une même branche sont connectés en série, la borne négative de l'accumulateur E_{i,j} étant connectée à la borne positive de l'accumulateur E_{i+1,j}. Le module 1 comprend, en outre, au moins un circuit électronique 5 qui peut être connecté aux accumulateurs E_{i,j} notamment pour en surveiller le bon fonctionnement. A titre d'exemple, le circuit électronique 5 peut être adapté à mesurer la tension Uᵢ aux bornes des accumulateurs d'un même étage Etᵢ.

Des disjoncteurs D_{i,j} pour i variant entre 2 et M et j variant entre 1 et N-1, peuvent être prévus entre les accumulateurs. A titre d'exemple, chaque disjoncteur D_{i,j} est connecté entre un noeud commun aux accumulateurs E_{i,j} et E_{i+1,j} et un noeud commun aux accumulateurs E_{i,j+1} et E_{i+1,j+1}. Toutefois, la disposition des disjoncteurs Di,j peut être différente de celle représentée en figure 1.

En fonctionnement, les bornes positives des accumulateurs de l'étage Et₁ sont connectées entre elles et forment une première borne B₁ du module et les bornes négatives des accumulateurs de l'étage Et_{N} sont connectées entre elles et forment une deuxième borne B₂ du module. Le module est, par exemple, adapté à fournir ou emmagasiner un courant continu dont l'intensité est supérieure à 150 A.

La figure 2 représente une vue en perspective d'un mode de réalisation du module 1 d'un ensemble-batterie correspondant au schéma électrique représenté en figure 1 avec M égal à 4 et N égal à 3. En figure 2, les accumulateurs sont représentés par des éléments parallélépipédiques 10 dont chaque côté peut varier de quelques millimètres à plusieurs dizaines de centimètres. Les disjoncteurs D_{i,j} et la carte électronique 5 du schéma de la figure 1 ne sont pas représentés en figure 2. A titre d'exemple, les branches s'étendent selon une direction (Ox), les étages s'étendent selon la direction (Oz). Des entretoises, non représentées, sont disposées entre les accumulateurs 10. En outre, l'ensemble des accumulateurs 10 peut être disposé dans un boîtier non représenté. Chaque accumulateur 10 comprend d'un même côté une première borne 12, par exemple la borne négative, et une deuxième borne 14, par exemple la borne positive. En figure 2, les connexions entre les bornes des accumulateurs 10 sont réalisées par des pièces de connexion métalliques 16 fixées aux bornes 12, 14 des accumulateurs 10 par exemple, par vissage, rivetage ou soudure.

Il peut alors être difficile d'extraire les accumulateurs 10 du module 1 notamment pour des opérations de maintenance ou pour recycler les accumulateurs. En outre, la manipulation des pièces de connexion métalliques 16 par un opérateur peut présenter un danger lors de la fixation des pièces de connexion métalliques 16 aux bornes 12, 14 des accumulateurs 10 et ce tout au long de l'assemblage.

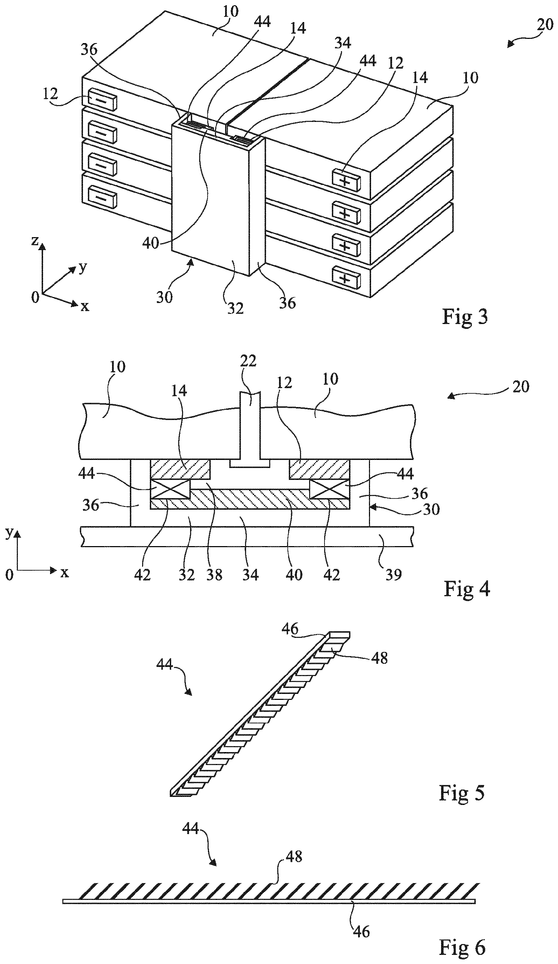

Les figures 3 et 4 représentent un mode de réalisation du module 20 d'un ensemble-batterie correspondant au schéma électrique représenté en figure 1 avec M égal à 4 et N égal à 2. La figure 3 est une vue en perspective du module 20. Les accumulateurs 10 sont identiques à ceux représentés en figure 2. La figure 4 est une coupe du module 20 représenté en figure 3 selon un plan perpendiculaire à l'axe (Oz). Le module 20 peut être connecté à un autre module ou à un dispositif électrique. Les moyens de connexion du premier ou du dernier étage du module avec un autre module ou un dispositif électrique ne sont pas représentés. En figure 4, on a représenté de façon partielle et schématique le système 22 de maintien des accumulateurs 10.

Le module 20 comprend un dispositif de connexion électrique 30 des accumulateurs 10 du premier étage aux accumulateurs 10 du deuxième étage. Le dispositif de connexion 30 comprend un élément de guidage 32 s'étendant parallèlement à la direction (Oz). L'élément de guidage 32 a, par exemple, une section en forme de U dans un plan perpendiculaire à la direction (Oz). L'élément de guidage 32 est, de préférence, en un matériau isolant électriquement. A titre d'exemple, chaque élément de guidage 32 est réalisé, par exemple, en polyétheréthercétone (PEEK). L'élément de guidage 32 comprend un fond 34, par exemple parallèle au plan (zOx), et deux portions latérales 36, par exemple parallèles au plan (zOy), qui délimitent une gorge 38 avec le fond 34 s'étendant selon la direction (Oz). L'élément de guidage 32 est maintenu plaqué contre les accumulateurs 10 par le boîtier 39 de l'ensemble-batterie, non représenté en figure 3 et représenté de façon schématique en figure 4.

Le dispositif de connexion 30 comprend une bande conductrice 40 disposée dans la gorge 38 et recouvrant le fond 34 de l'élément de guidage 32 et fixée à celui-ci, par exemple par vissage. La bande conductrice 40, par exemple métallique, s'étend selon la direction (Oz) sur toute la longueur de l'élément de guidage 32. La bande conductrice 40 peut être réalisée en un matériau avec un contact résistif faible, une résistance élevée à la corrosion et une bonne conductivité, par exemple de l'acier nickelé et/ou argenté, du cuivre argenté, du laiton argenté, de l'aluminium recuit argenté ou du cuivre nickelé. L'épaisseur de la bande conductrice 40 peut varier de quelques micromètres à plusieurs millimètres. La bande conductrice 40 comprend deux rainures parallèles 42, s'étendant selon la direction (Oz).

Le dispositif de connexion 30 comprend, en outre, des connecteurs électriques souples 44 au contact de la bande conductrice 40. Chaque connecteur électrique souple 44 est disposé dans l'une des rainures 42 prévues dans la bande conductrice 40. A titre de variante, les rainures 42 peuvent ne pas être présentes et les connecteurs électriques souples 44 peuvent être fixés à la bande conductrice 40. Les connecteurs électriques souples 44 correspondent, par exemple, à des connecteurs électriques à lames multiples. Les connecteurs 44 viennent au contact des bornes 12, 14 des accumulateurs 10 lorsque l'élément de guidage 32 est plaqué contre les accumulateurs 10. A titre d'exemple, les connecteurs à lames multiples 44 peuvent être répartis sur la totalité de la longueur de la bande métallique 40 selon la direction (Oz). A titre de variante, les connecteurs à lames multiples 44 peuvent être seulement prévus aux emplacements des bornes 12, 14 lorsque l'élément de guidage 32 est mis en place contre les accumulateurs 10. La déformation élastique des connecteurs électriques souples 44 permet de rattraper les jeux entre les différentes pièces du module 20 lors du montage du dispositif de connexion 30.

Le dispositif de connexion 30 relie électriquement les bornes 14 des accumulateurs d'un étage aux bornes 12 des accumulateurs de l'étage adjacent. Lorsque l'élément de guidage 32 est plaqué contre les accumulateurs 10, les bornes 14 des accumulateurs 10 d'un étage et les bornes 12 des accumulateurs 10 de l'étage adjacent sont prises en sandwich entre les parois latérales 36 de l'élément de guidage 32 et forment des butées pour l'élément de guidage 32 pour un déplacement selon la direction (Ox). Les parois latérales 36 permettent de protéger les connecteurs à lames multiples 44 contre un écrasement tout en assurant une bonne connexion électrique des connecteurs à lames multiples 48 avec les bornes 12, 14 des accumulateurs 10.

Lorsque le module 20 comprend plus de deux étages d'accumulateurs 10, deux ou plus de deux dispositifs de connexion électrique 30 peuvent être utilisés.

Les figures 5 et 6 représentent un mode de réalisation d'un connecteur à lames multiples 44. Le connecteur comprend une base métallique 46 sur laquelle sont fixées des lames 48 déformables. La base 46 peut être confondue avec la bande métallique 40 ou être rapportée sur la bande métallique 40. Les lames 48 peuvent être inclinées par rapport à la base 46. A titre d'exemple, le nombre de lames par centimètre de connecteur 44 varie de 1 à 10. Les lames 48 peuvent être fixées à la base 46, par exemple par rivetage ou vissage ou en prévoyant une gorge dans la base dans laquelle est logée une portion de forme complémentaire de la lame.

Le courant est transmis entre les accumulateurs 10 d'un étage aux accumulateurs 10 de l'étage adjacent par l'intermédiaire des bornes 12, 14, des connecteurs à lames multiples 44 et de la bande conductrice 40. De façon avantageuse, la résistance électrique entre chaque borne 12 de l'accumulateur 10 et la borne 14 la plus proche de l'accumulateur 10 de l'étage adjacent est sensiblement identique, c'est-à-dire identique à 25 % près. Ceci permet d'obtenir une répartition sensiblement homogène du courant passant entre les accumulateurs 10. La liaison électrique entre chaque connecteur à lames multiples 44 et la borne 12, 14 est obtenue par la mise en appui avec pression des lames 48 du connecteur 44, en particulier des rebords des lames, contre la borne 12, 14. Il n'y a pas de fixation des connecteurs à lames multiples 44 aux accumulateurs 10.

Pour démonter le module 20, il suffit de déplacer par translation l'élément de guidage 32 pour l'éloigner des accumulateurs 10. Ceci entraîne une détente des lames multiples 48 des connecteurs 44 et un écartement des connecteurs 44 par rapport aux accumulateurs 10.

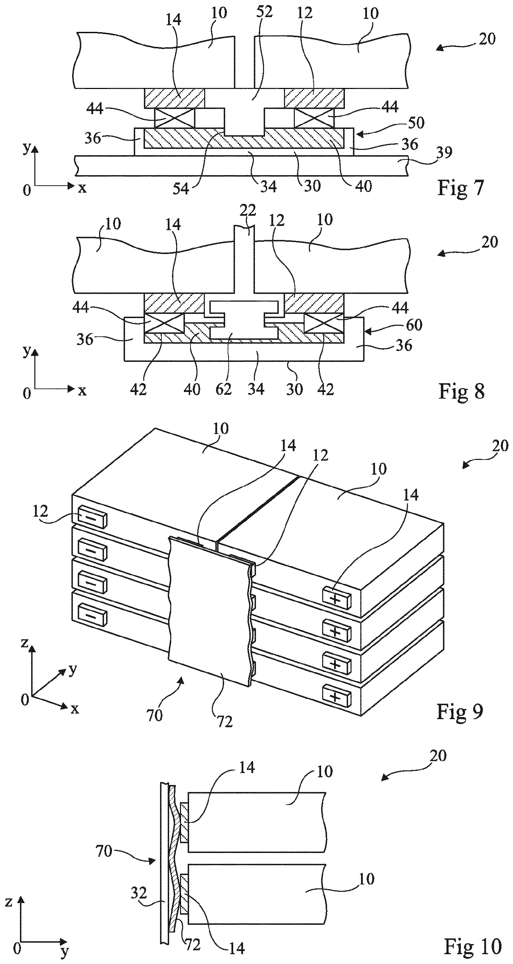

La figure 7 est une vue analogue à la figure 4 d'un autre mode de réalisation du dispositif de connexion 50 du module 20. Le dispositif de connexion 50 comprend l'ensemble des éléments du dispositif de connexion 30 représenté en figure 4 à la différence que les parois latérales 36 de l'élément de guidage 32 ne sont pas en contact avec les accumulateurs 10. En outre, le dispositif de connexion 50 comprend une entretoise 52 interposée entre les accumulateurs 10 et la bande conductrice 40. De plus, la bande conductrice 40 comprend une rainure 54, l'entretoise 52 étant en contact avec la bande conductrice 40 dans la rainure 54 qui permet un blocage du dispositif de connexion 50 selon l'axe (Ox). L'entretoise 52 est en un matériau isolant électriquement et est disposée entre les bornes 14 des accumulateurs 10 d'un étage et les bornes 12 des accumulateurs 10 de l'étage adjacent. L'entretoise 52 peut ne pas être fixée aux accumulateurs 10 ou à la bande conductrice 40 et être mise en place lors du montage du module 20. A titre de variante, l'entretoise 52 est fixée à la bande conductrice 40.

La figure 8 est une vue analogue à la figure 4 d'un autre mode de réalisation du dispositif de connexion 60 du module 20. Le dispositif de connexion 60 comprend l'ensemble des éléments du dispositif de connexion 30 représenté en figure 4 à la différence que le dispositif de connexion 60 comprend une pièce intermédiaire 62 qui coopère avec le système de maintien 22 et avec la bande conductrice 40 par une liaison de type glissière qui permet seulement le coulissement du dispositif de connexion 60 par rapport aux modules 20 selon la direction (Oz).

La figure 9 est une vue analogue à la figure 3 d'un autre mode de réalisation du dispositif de connexion 70 du module 20. Le dispositif de connexion 70 comprend l'ensemble des éléments du dispositif de connexion 30 représenté en figure 4 à la différence que la bande conductrice 40 et les connecteurs électriques souples 44 sont remplacés par une plaque ondulée 72 en un matériau conducteur électriquement. L'élément de guidage 32 n'est pas représenté en figure 9. L'élément de guidage 32 peut avoir la forme représentée en figure 4.

La figure 10 est une coupe du module 20 représenté en figure 9 selon un plan perpendiculaire à l'axe (Ox). La plaque 42 est adaptée à se déformer de façon élastique. A titre d'exemple, la plaque 72 est réalisée en un alliage de cuivre au béryllium. Le pas des ondulations de la plaque 72 correspond au pas entre les bornes 12 et 14 des accumulateurs 10 selon la direction (Oz). De ce fait, lorsque la plaque 72 est maintenue en appui contre les bornes 12, 14 des accumulateurs 10 par l'élément de guidage 32, toutes les bornes 14 des accumulateurs 10 d'un étage et toutes les bornes 12 des accumulateurs 10 de l'étage adjacent sont au contact de la plaque ondulée 72. La déformation élastique de la plaque ondulée 72 permet de rattraper les jeux entre les différentes pièces du module 20 lors du montage du dispositif de connexion 70.

Le courant est transmis entre les accumulateurs 10 d'un étage aux accumulateurs 10 de l'étage adjacent par l'intermédiaire des bornes 12, 14 et de la plaque ondulée 72. La liaison électrique entre la plaque ondulée 72 et les bornes 12, 14 est obtenue par la mise en appui avec pression des portions bombées de la plaque ondulée 72 contre les bornes 12, 14. Il n'y a pas de fixation de la plaque ondulée 72 aux accumulateurs 10. De façon avantageuse, la résistance électrique entre chaque borne 12 de l'accumulateur 10 et la borne 14 de l'accumulateur 10 de l'étage adjacent la plus proche est sensiblement identique, c'est-à-dire identique à 25 % près. Ceci permet d'obtenir une répartition sensiblement homogène du courant passant entre les accumulateurs 10.

Pour démonter le module 20, il suffit de déplacer par translation l'élément de guidage 32 pour l'éloigner des accumulateurs 10. Ceci entraîne une détente de la plaque ondulée 72 et un écartement de la plaque ondulée 72 par rapport aux accumulateurs 10.

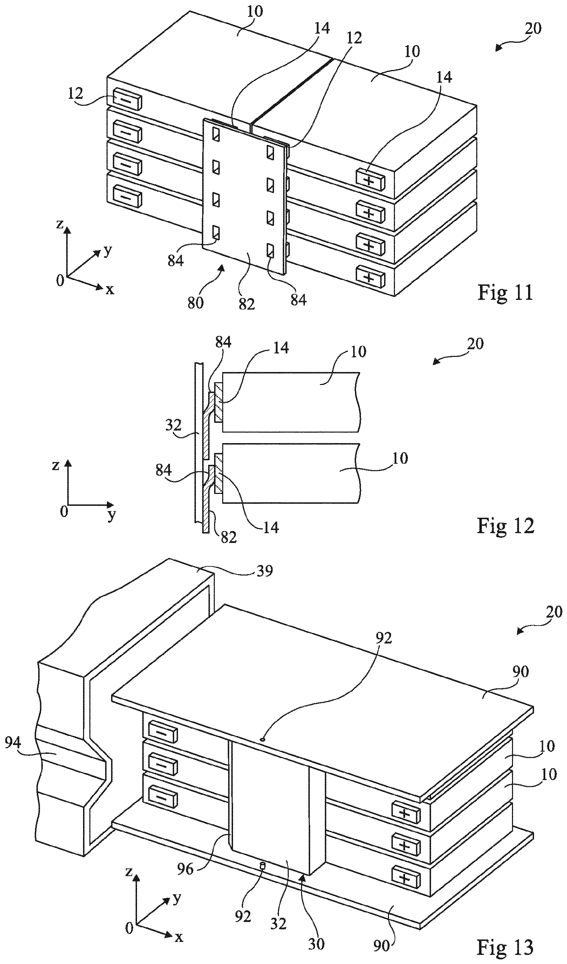

La figure 11 est une vue analogue à la figure 9 d'un autre mode de réalisation du dispositif de connexion 80 du module 20. Le dispositif de connexion 80 comprend l'ensemble des éléments du dispositif de connexion 70 représenté sur les figures 9 et 10 à la différence que la plaque ondulée 72 est remplacée par une plaque plane 82 en un matériau conducteur électriquement comprenant des doigts élastiques 84 se projetant du côté des accumulateurs 10. L'élément de guidage 32 n'est pas représenté en figure 11. L'élément de guidage 32 peut avoir la forme représentée en figure 4.

La figure 12 est une coupe du module 20 représenté en figure 11 selon un plan perpendiculaire à l'axe (Ox). A titre d'exemple, la plaque 82 est réalisée en un alliage de cuivre au béryllium. Chaque doigt 84 est situé en vis-à-vis de l'une des bornes 12, 14 de sorte que, lorsque la plaque 82 est maintenue en appui contre les bornes 12, 14 des accumulateurs 10 par l'élément de guidage 32, toutes les bornes 14 des accumulateurs 10 d'un étage et toutes les bornes 12 des accumulateurs 10 de l'étage adjacent sont au contact de doigts 84 de la plaque 82. Les doigts 84 peuvent être obtenus par découpe de la plaque 82. La déformation élastique des doigts 84 permet de rattraper les jeux entre les différentes pièces du module 20 lors du montage du dispositif de connexion 70. Selon un mode de réalisation, le contact électrique entre la plaque 82 et une même borne peut être réalisé par deux doigts ou davantage. Ceci permet de façon avantageuse de minimiser la résistance de contact et d'avoir une redondance au niveau de la connexion.

Le courant est transmis entre les accumulateurs 10 d'un étage aux accumulateurs 10 de l'étage adjacent par l'intermédiaire des bornes 12, 14 et de la plaque 82. La liaison électrique entre la plaque 82 et les bornes 12, 14 est obtenue par la mise en appui avec pression des doigts 84 de la plaque 72 contre les bornes 12, 14. Il n'y a pas de fixation de la plaque 72 aux accumulateurs 10. De façon avantageuse, la résistance électrique entre chaque borne 12 de l'accumulateur 10 et la borne 14 de l'accumulateur 10 de l'étage adjacent la plus proche est sensiblement identique, c'est-à-dire identique à 25 % près. Ceci permet d'obtenir une répartition sensiblement homogène du courant passant entre les accumulateurs 10.

Dans les modes de réalisation des dispositifs de connexion 30, 50, 60, 70, 80 décrits précédemment, la présence de l'élément de guidage 32 en un matériau isolant électriquement, qui recouvre la totalité des éléments conducteurs électriquement du dispositif de connexion, permet à un opérateur de manipuler le dispositif de connexion au contact des accumulateurs 10 sans risque, même lorsque les accumulateurs 10 ne sont pas complètement déchargés.

Pour démonter le module 20, il suffit de déplacer par translation l'élément de guidage 32 pour l'éloigner des accumulateurs 10. Ceci entraîne une détente des doigts 84 de la plaque 82 et un écartement de la plaque 82 par rapport aux accumulateurs 10.

La figure 13 illustre un mode de réalisation d'un procédé de montage du module 20 tel que représenté en figure 3. En figure 13, on a, en outre, représenté deux plaques 90 du module 20 prenant en sandwich l'ensemble des accumulateurs 10. Chaque plaque 90 s'étend sensiblement parallèlement aux plans (yOx). Le module 20 comprend, pour chaque plaque 90, un pion 92 fixé à la plaque 90, éventuellement de façon amovible, et qui se projette depuis la plaque 90 correspondante vers la plaque opposée. En figure 13, on a, en outre, représenté le boîtier 39 qui comprend une portion 94 qui se projette vers l'intérieur du boîtier 39.

Selon un mode de réalisation du procédé de montage, le dispositif de connexion 30 est disposé par un opérateur contre les accumulateurs 10. A titre d'exemple, les plaques 90 étant disposées de part et d'autre de l'ensemble des accumulateurs 10, le dispositif de connexion 30 peut être inséré selon la direction (Oy) et être maintenu par l'opérateur. Les pions 92 sont mis en place et forment une butée selon la direction (Oy) pour le dispositif de connexion 30. Toutefois, un jeu peut alors être présent entre le dispositif de connexion 30 et les accumulateurs 10. Une rainure peut être envisagée sur l'élément de guidage 32 afin de positionner le dispositif de connexion dans les directions (Ox) et (Oy). Par ailleurs, comme le mouvement de déplacement du dispositif de connexion 30 selon la direction (Ox) est également contraint, l'opérateur peut relâcher le dispositif de connexion 30. L'opérateur peut introduire le système comprenant les accumulateurs 10, les plaques 90 et le dispositif de connexion 30 dans le boîtier 39 par un coulissement selon la direction (Ox). La portion enfoncée 94 du boîtier 39 vient en appui contre le dispositif de connexion 30 et le plaque contre les accumulateurs 10 permettant de relier les accumulateurs 10 d'un étage aux accumulateurs 10 de l'étage adjacent. Pour faciliter l'introduction du dispositif de connexion 30 dans le boîtier 39, l'élément de guidage 32 peut comprendre un chanfrein 96 venant coopérer avec la portion enfoncée 94 du boîtier 39. Cette solution permet de connecter l'ensemble des cellules en toute sécurité le plus tard possible au cours du processus d'assemblage de l'ensemble-batterie.

A titre de variante, le fond 34 de l'élément de guidage 32 peut comprendre une rainure du côté opposé à la bande conductrice 40 dans laquelle pénètre le pion 92. La portion enfoncée 94 peut alors ne pas être présente.

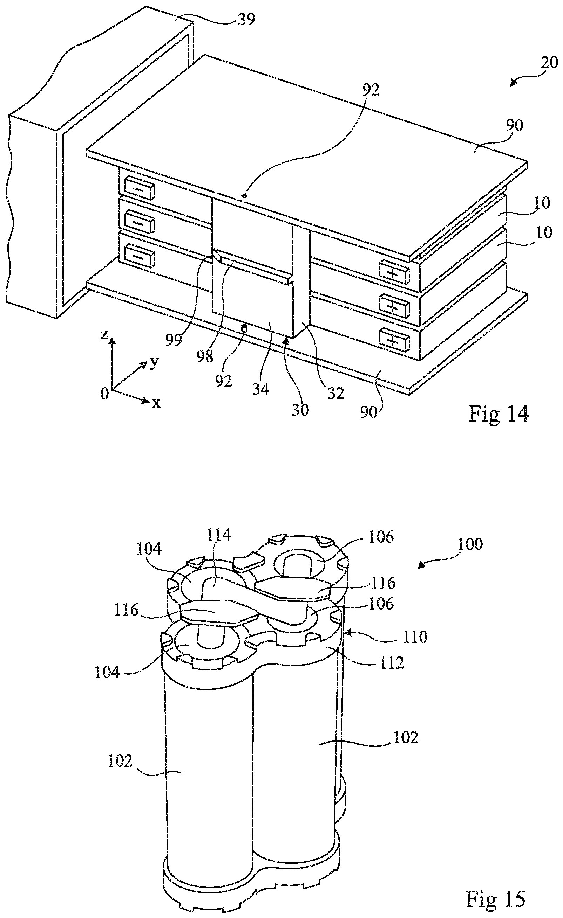

La figure 14 est une figure analogue à la figure 13 illustrant un autre mode de réalisation d'un procédé de montage du module 20 tel que représenté en figure 3. Dans ce mode de réalisation, le boîtier 39 ne comprend pas de portion enfoncée 94 et l'élément de guidage 32 comprend une nervure 98 se projetant depuis la face du fond 34 opposée aux accumulateurs 10 et s'étendant selon la direction (Ox). La nervure 98 peut comprendre un chanfrein 99 à l'extrémité située du côté du boîtier 39. Le procédé de montage du module 20 peut être analogue à ce qui a été décrit précédemment, le chanfrein 99 venant coopérer avec la portion enfoncée 94 du boîtier 39. Ce mode de réalisation permet, de façon avantageuse, de simplifier le design du boitier 39.

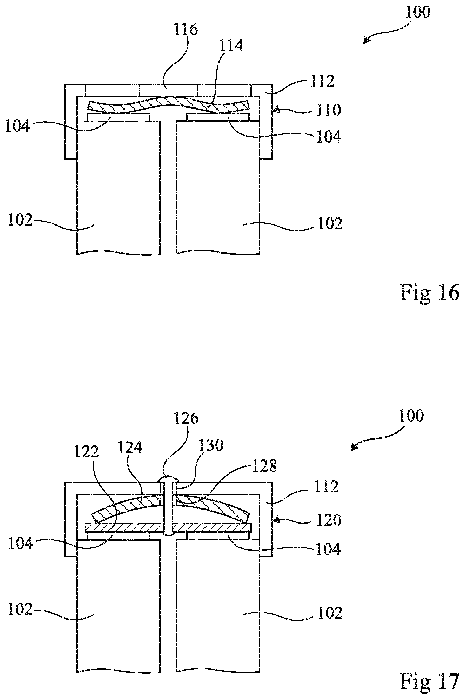

Les figures 15 et 16 représentent un mode de réalisation du module 100 d'un ensemble-batterie correspondant au schéma électrique représenté en figure 1 avec M égal à 2 et N égal à 2. La figure 16 est une coupe du module 100. Sur les figures 15 et 16, les accumulateurs sont représentés par des éléments cylindriques 102 pouvant avoir un diamètre variant de quelques millimètres à plusieurs centimètres et une hauteur variant de quelques millimètres à plusieurs dizaines de centimètres. Chaque accumulateur 102 comprend une borne négative 104 à une extrémité et une borne positive 106 à l'extrémité opposée. A titre d'exemple, les deux accumulateurs 102 les plus à gauche en figure 15 font partie d'un premier étage et sont représentés avec leur borne négative 104 vers le haut et les deux accumulateurs 102 les plus à droite en figure 15 font partie d'un deuxième étage et sont représentés avec leur borne positive 106 vers le haut. La figure 16 est une coupe du module 100 passant par un plan comprenant les axes des deux accumulateurs les plus à gauche en figure 15.

Le module 100 comprend un dispositif de connexion électrique 110 des accumulateurs 102 du premier étage aux accumulateurs 102 du deuxième étage. Le dispositif de connexion 110 comprend un élément de guidage 112 fixé aux accumulateurs 102 et qui joue, dans le présent mode de réalisation, également le rôle d'entretoise entre les accumulateurs 102. L'élément de guidage 112 est, de préférence, en un matériau isolant électriquement. A titre d'exemple, chaque élément de guidage 112 est réalisé, par exemple, en polyétheréthercétone (PEEK).

Le dispositif de connexion 110 comprend, en outre, une lame 114 ondulée et conductrice électriquement. La lame ondulée 114 est adaptée à se déformer de façon élastique. A titre d'exemple, la lame 114 est réalisée en un alliage de cuivre au béryllium. Dans le présent mode de réalisation, la lame 114 s'étend en zigzags. L'élément de guidage 112 comprend des portions 116 recouvrant la lame 114 de sorte que la lame 114 est prise en sandwich entres les accumulateurs 102 et les portions 116 de l'élément de guidage 112. Le pas des ondulations de la lame 114 et la forme des zigzags de la lame 114 correspondent au pas entre les bornes 104 et 106 des accumulateurs 102. De ce fait, lorsque la lame 114 est maintenue en appui contre les bornes 104, 106 des accumulateurs 102 par l'élément de guidage 110, toutes les bornes 104 des accumulateurs 102 d'un étage et toutes les bornes 106 des accumulateurs 102 de l'étage adjacent sont au contact de la lame ondulée 114. La déformation élastique de la lame ondulée 114 permet de rattraper les jeux entre les différentes pièces du module 100 lors du montage du dispositif de connexion 100. Ceci permet d'obtenir une connexion électrique de bonne qualité entre les bornes 104, 106 et la lame ondulée 114. La liaison électrique entre la lame 114 et les bornes 104 est obtenue par la mise en appui avec pression de portions bombées de la lame 114 contre les bornes 104. Il n'y a pas de fixation de la lame 114 aux accumulateurs 102.

Pour démonter le module 100, il suffit de déplacer par translation l'élément de guidage 112 pour l'éloigner des accumulateurs 102. Ceci entraîne une détente de la lame ondulée 114 et un écartement de la lame ondulée 114 par rapport aux accumulateurs 102.

La figure 17 est une vue analogue à la figure 16 d'un autre mode de réalisation du dispositif de connexion 120 du module 100. Le dispositif de connexion 120 comprend l'ensemble des éléments du dispositif de connexion 110 représenté en figure 16 à la différence que la lame ondulée 114 est remplacée par une lame plane 122. Le dispositif de connexion 120 comprend, en outre, un élément souple 124 adapté à se déformer de façon élastique et pris en sandwich entre l'élément de guidage 112 et la lame 122. Lorsque l'élément de guidage 112 est fixé aux accumulateurs, l'élément souple 124 maintient en appui la lame 122 contre les bornes 104 et 106. Ceci permet d'obtenir une connexion électrique de bonne qualité entre les bornes 104, 106 et la lame 122. La lame souple 122 peut intégrer des formes spécifiques permettant un ou plusieurs points de contact avec la borne, ces formes étant, par exemple, réalisées par emboutissage. La liaison électrique entre la lame 122 et les bornes 104 est obtenue par la mise en appui avec pression de la lame 122 contre les bornes 104. Il n'y a pas de fixation de la lame 122 aux accumulateurs 102.

Le dispositif de connexion 120 peut, en outre, comprendre un pion de centrage 126, fixé à la lame 122 et passant au travers d'une ouverture 128 prévue dans l'élément souple 124 et d'une ouverture 130 prévue dans l'élément de guidage 112. Le pion de centrage 126 permet de faciliter le positionnement de la lame 122 et de l'élément souple 124 par rapport à l'élément de guidage 112 lors du montage du dispositif de connexion 120. Le pion de centrage 126 peut, en outre, assurer le maintien de la lame 122 et de l'élément souple 124 avec le dispositif de connexion 120 (déformation plastique envisageable de type rivetage).

Pour démonter le module 100, il suffit de déplacer par translation l'élément de guidage 112 pour l'éloigner des accumulateurs 102. Ceci entraîne une détente de l'élément souple 124 et un écartement de la lame 122 par rapport aux accumulateurs 102.

Des modes de réalisation particuliers ont été décrits. Diverses variantes et modifications apparaîtront à l'homme de l'art.

## Revendications

1. Module (20 ; 100) de batterie comprenant au moins des premier et deuxième groupes d'accumulateurs (10 ; 102) comprenant chacun au moins deux accumulateurs, chaque accumulateur comprenant une première borne (12 ; 104) et une deuxième borne (14 ; 106), et au moins un dispositif (30 ; 50 ; 60 ; 70 ; 80 ; 110 ; 120) de connexion électrique de toutes les premières bornes des accumulateurs du premier groupe à toutes les deuxièmes bornes des accumulateurs du deuxième groupe, le dispositif de connexion comprenant :
un élément conducteur électriquement (40, 44 ; 72 ; 82 ; 114 ; 122), monobloc ou comprenant plusieurs pièces, au contact de toutes les premières bornes des accumulateurs du premier groupe et de toutes les deuxièmes bornes des accumulateurs du deuxième groupe et non fixé aux accumulateurs ;
un élément déformable élastiquement (44 ; 72 ; 82 ; 114 ; 124) intégré à l'élément conducteur électriquement ou au contact de l'élément conducteur électriquement ; et
un élément de guidage (32 ; 112) en un matériau isolant électriquement adapté à comprimer l'élément déformable élastiquement contre les accumulateurs.

2. Module de batterie selon la revendication 1, dans lequel, pour chaque première borne (12) des accumulateurs (10) du premier groupe, la résistance électrique entre cette première borne et la deuxième borne (14) la plus proche des accumulateurs (10) du deuxième groupe est identique à 10 % près.

3. Module de batterie selon la revendication 1 ou 2, dans lequel l'élément déformable élastiquement comprend des connecteurs électriques à contacts multiples (44).

4. Module de batterie selon la revendication 1 ou 2, dans lequel l'élément conducteur électriquement comprend une plaque ondulée (72) ou une lame ondulée (114) au contact de toutes les premières bornes (12 ; 104) des accumulateurs du premier groupe et de toutes les deuxièmes bornes (14 ; 106) des accumulateurs du deuxième groupe et non fixée aux accumulateurs.

5. Module de batterie selon la revendication 4, dans lequel la lame ondulée (114) s'étend en zigzags.

6. Module de batterie selon la revendication 1 ou 2, dans lequel l'élément conducteur électriquement comprend une plaque plane (82) comprenant des doigts (84) déformables élastiquement en contact avec les premières bornes (12) des accumulateurs (10) du premier groupe et les deuxièmes bornes (14) des accumulateurs du deuxième groupe.

7. Module de batterie selon l'une quelconque des revendications 1 à 6, dans lequel l'élément de guidage (32) recouvre complètement l'élément conducteur électriquement (82) et l'élément déformable élastiquement (40, 44 ; 72 ; 82) du côté opposé aux accumulateurs (10).

8. Module de batterie selon l'une quelconque des revendications 1 à 7, comprenant un système de maintien (22) des accumulateurs (10) et dans lequel le dispositif (60) de connexion électrique est relié au système de maintien par une liaison glissière.

9. Module de batterie selon l'une quelconque des revendications 1 à 8, comprenant, en outre, un boîtier (39) contenant les premier et deuxième groupes d'accumulateurs, le dispositif de connexion (30 ; 50 ; 60 ; 70 ; 80) étant pris en sandwich entre le boîtier et les accumulateurs.

10. Module de batterie selon l'une quelconque des revendications 1 à 9, dans lequel l'élément de guidage (112) est, en outre, interposé entre chaque paire d'accumulateurs (102) adjacents.

11. Module de batterie selon l'une quelconque des revendications 1 à 10, dans lequel l'élément conducteur électriquement (40, 44 ; 72 ; 82 ; 114 ; 122) comprend une portion courbe au contact de chaque première borne et de chaque deuxième borne.

12. Module de batterie selon l'une quelconque des revendications 1 à 11, dans lequel la liaison entre l'élément conducteur électriquement (40, 44 ; 72 ; 82 ; 114 ; 122) et chaque première borne et entre l'élément conducteur électriquement et chaque deuxième borne est seulement une liaison par appui sous pression.

13. Procédé de montage du module de batterie selon l'une quelconque des revendications 1 à 12, comprenant l'application du dispositif de connexion électrique (30 ; 50 ; 60 ; 70 ; 80 ; 110 ; 120) contre les accumulateurs (10 ; 102) de façon à comprimer l'élément déformable élastiquement (44 ; 72 ; 82 ; 114 ; 124) et maintenir en appui l'élément conducteur électriquement (40, 44 ; 72 ; 82 ; 114 ; 122) au contact de toutes les premières bornes (12 ; 104) des accumulateurs du premier groupe et de toutes les deuxièmes bornes (14 ; 106) des accumulateurs du deuxième groupe.

14. Procédé selon la revendication 13, comprenant les étapes suivantes :
placer le dispositif de connexion électrique (30) contre les accumulateurs (10) ;
empêcher le retrait du dispositif de connexion électrique ; et
introduire le dispositif dans un boîtier (39), le boîtier venant appliquer le dispositif de connexion électrique contre les accumulateurs (10) de façon à comprimer l'élément déformable élastiquement (44).

15. Procédé de démontage du module de batterie selon l'une quelconque des revendications 1 à 12, comprenant l'éloignement du dispositif de connexion électrique (30 ; 50 ; 60 ; 70 ; 80 ; 110 ; 120) des accumulateurs (10 ; 102) de façon à détendre l'élément déformable élastiquement (44 ; 72 ; 82 ; 114 ; 124) et écarter l'élément conducteur électriquement (40, 44 ; 72 ; 82 ; 114 ; 122) de toutes les premières bornes (12 ; 104) des accumulateurs du premier groupe et de toutes les deuxièmes bornes (14 ; 106) des accumulateurs du deuxième groupe.

## Patentansprüche

1. Batteriemodul (20; 100), das mindestens erste und eine zweite Gruppen von Akkumulatoren (10; 102) aufweist, die jeweils wenigstens zwei Akkumulatoren aufweisen, wobei jeder Akkumulator einen ersten Anschluss (12; 104) und einen zweiten Anschluss (14; 106) aufweist, und wenigstens eine Vorrichtung (30; 50; 60; 70; 80; 110; 120) der elektrischen Verbindung aller ersten Anschlüsse der Akkumulatoren der ersten Gruppe mit allen zweiten Anschlüssen der Akkumulatoren der zweiten Gruppe, wobei die Verbindungsvorrichtung Folgendes aufweist:
ein elektrisch leitfähiges Element (40, 44; 72; 82; 114; 122), als Monoblock oder eine Vielzahl von Teilen aufweisend, in Kontakt mit allen ersten Anschlüssen der Akkumulatoren der ersten Gruppe und mit allen zweiten Anschlüssen der Akkumulatoren der zweiten Gruppe und das nicht an den Akkumulatoren befestigt ist;
ein elastisch verformbares Element (44; 72; 82; 114; 124), das in das elektrisch leitfähige Element integriert oder in Kontakt mit dem elektrisch leitfähigen Element steht; und
ein Führungselement (32; 112) aus einem elektrisch isolierenden Material, das in der Lage ist, das elastisch verformbare Element gegen die Akkumulatoren zu drücken.

2. Batteriemodul nach Anspruch 1, wobei für jeden ersten Anschluss (12) der Akkumulatoren (10) der ersten Gruppe der elektrische Widerstand zwischen diesem ersten Anschluss und dem zweiten Anschluss (14), der den Akkumulatoren (10) der zweiten Gruppe am nächsten liegt, innerhalb von 10% identisch ist.

3. Batteriemodul nach Anspruch 1 oder 2, wobei das elastisch verformbare Element mehrpolige elektrische Verbinder (44) aufweist.

4. Batteriemodul nach Anspruch 1 oder 2, wobei das elektrisch leitende Element eine Wellplatte (72) oder eine gewellte Schiene (114) aufweist, die mit allen ersten Anschlüssen (12; 104) der Akkumulatoren der ersten Gruppe und mit allen zweiten Anschlüssen (14; 106) der Akkumulatoren der zweiten Gruppe in Kontakt steht und nicht an den Akkumulatoren befestigt ist.

5. Batteriemodul nach Anspruch 4, wobei sich die gewellte Schiene (114) im Zickzack erstreckt.

6. Batteriemodul nach Anspruch 1 oder 2, wobei das elektrisch leitfähige Element eine ebene Platte (82) aufweist, die elastisch verformbare Finger (84) aufweist, die mit den ersten Anschlüssen (12) der Akkumulatoren (10) der ersten Gruppe und den zweiten Anschlüssen (14) der Akkumulatoren der zweiten Gruppe in Kontakt stehen.

7. Batteriemodul nach einem der Ansprüche 1 bis 6, wobei das Führungselement (32) das elektrisch leitfähige Element (82) und das elastisch verformbare Element (40, 44; 72; 82) auf der den Akkumulatoren (10) entgegengesetzten Seite vollständig abdeckt.

8. Batteriemodul nach einem der Ansprüche 1 bis 7, aufweisend ein System (22) zum Halten der Akkumulatoren (10) und wobei die elektrische Verbindungsvorrichtung (60) mit dem Haltesystem über eine Gleitverbindung gekoppelt ist.

9. Batteriemodul nach einem der Ansprüche 1 bis 8, ferner aufweisend ein Gehäuse (39), das die erste und zweite Gruppe von Akkumulatoren enthält, wobei die Verbindungsvorrichtung (30; 50; 60; 70; 80) zwischen dem Gehäuse und den Akkumulatoren angeordnet ist.

10. Batteriemodul nach einem der Ansprüche 1 bis 9, wobei das Führungselement (112) weiterhin zwischen jedem Paar benachbarter Akkumulatoren (102) angeordnet ist.

11. Batteriemodul nach einem der Ansprüche 1 bis 10, wobei das elektrisch leitfähige Element (40, 44; 72; 82; 114; 122) einen gekrümmten Abschnitt aufweist, der in Kontakt mit jedem ersten Anschluss und mit jedem zweiten Anschluss steht.

12. Batteriemodul nach einem der Ansprüche 1 bis 11, wobei die Kopplung zwischen dem elektrisch leitfähigen Element (40, 44; 72; 82; 114; 122) und jedem ersten Anschluss und zwischen dem elektrisch leitenden Element und jedem zweiten Anschluss nur eine Presskopplung ist.

13. Verfahren zum Zusammenbau des Batteriemoduls nach einem der Ansprüche 1 bis 12, aufweisend das Anlegen der elektrischen Verbindungsvorrichtung (30; 50; 60; 70; 80; 110; 120) gegen die Akkumulatoren (10; 102), um das elastisch verformbare Element (44; 72; 82; 114; 124) zusammenzudrücken und den Druck des elektrisch leitfähigen Elements (40, 44; 72; 82; 114; 122) in Kontakt mit allen ersten Anschlüssen (12; 104) der Akkumulatoren der ersten Gruppe und mit allen zweiten Anschlüssen (14; 106) der Akkumulatoren der zweiten Gruppe aufrechtzuerhalten.

14. Verfahren nach Anspruch 13, aufweisend die Schritte:
Platzieren der elektrischen Verbindungsvorrichtung (30) an den Akkumulatoren (10);
Verhindern des Entfernens der elektrischen Verbindungsvorrichtung; und
Einführen der Vorrichtung in ein Gehäuse (39), wobei das Gehäuse die elektrische Verbindungsvorrichtung gegen die Akkumulatoren (10) drückt, um das elastisch verformbare Element (44) zusammenzudrücken.

15. Verfahren zum Auseinanderbauen des Batteriemoduls nach einem der Ansprüche 1 bis 12, aufweisend das Entfernen der elektrischen Verbindungsvorrichtung (30; 50; 60; 70; 80; 110; 120) von den Akkumulatoren (10; 102), um das elastisch verformbare Element (44; 72; 82; 114; 124) zu lösen, und das Entfernen des elektrisch leitfähigen Elements (40, 44; 72; 82; 114; 122) von allen ersten Anschlüssen (12; 104) der Akkumulatoren der ersten Gruppe und allen zweiten Anschlüssen (14; 106) der Akkumulatoren der zweiten Gruppe.

## Claims

1. A battery module (20; 100) comprising at least first and second groups of accumulators (10; 102), each comprising at least two accumulators, each accumulator comprising a first terminal (12; 104) and a second terminal (14; 106), and at least one device (30; 50; 60; 70; 80; 110; 120) of electric connection of all the first terminals of the accumulators of the first group to all the second terminals of the accumulators of the second group, the connection device comprising:
an electrically-conductive element (40, 44; 72; 82; 114; 122), monoblock or comprising a plurality of parts, in contact with all the first terminals of the accumulators of the first group and with all the second terminals of the accumulators of the second group and which is not attached to the accumulators;
a resiliently deformable element (44; 72; 82; 114; 124) integrated to the electrically-conductive element or in contact with the electrically-conductive element; and
a guide element (32; 112) made of an electrically-insulating material capable of compressing the resiliently deformable element against the accumulators.

2. The battery module of claim 1, wherein, for each first terminal (12) of the accumulators (10) of the first group, the electric resistance between this first terminal and the second terminal (14) closest to the accumulators (10) of the second group is identical to within 10%.

3. The battery module of claim 1 or 2, wherein the resiliently deformable element comprises multiple-contact electric connectors (44).

4. The battery module of claim 1 or 2, wherein the electrically-conductive element comprises a corrugated sheet (72) or a corrugated blade (114) in contact with all the first terminals (12; 104) of the accumulators of the first group and with all the second terminals (14; 106) of the accumulators of the second group and which is not attached to the accumulators.

5. The battery module of claim 4, wherein the corrugated blade (114) extends in zigzag.

6. The battery module of claim 1 or 2, wherein the electrically-conductive element comprises a planar plate (82) comprising resiliently deformable fingers (84) in contact with the first terminals (12) of the accumulators (10) of the first group and the second terminals (14) of the accumulators of the second group.

7. The battery module of any of claims 1 to 6, wherein the guide element (32) entirely covers the electrically-conductive element (82) and the resiliently deformable element (40, 44; 72; 82) on the side opposite to the accumulators (10).

8. The battery module of any of claims 1 to 7, comprising a system (22) for holding the accumulators (10) and wherein the electric connection device (60) is coupled to the holding system by a sliding joint.

9. The battery module of any of claims 1 to 8, further comprising a package (39) containing the first and second groups of accumulators, the connection device (30; 50; 60; 70; 80) being sandwiched between the package and the accumulators.

10. The battery module of any of claims 1 to 9, wherein the guide element (112) is further interposed between each pair of adjacent accumulators (102).

11. The battery module of any of claims 1 to 10, wherein the electrically-conductive element (40, 44; 72; 82; 114; 122) comprises a curved portion in contact with each first terminal and with each second terminal.

12. The battery module of any of claims 1 to 11, wherein the coupling between the electrically-conductive element (40, 44; 72; 82; 114; 122) and each first terminal and between the electrically-conductive element and each second terminal is only a pressure coupling.

13. A method of assembling the battery module of any of claims 1 to 12, comprising applying the electric connection device (30; 50; 60; 70; 80; 110; 120) against the accumulators (10; 102) to compress the resiliently deformable element (44; 72; 82; 114; 124) and to maintain the pressure of the electrically-conductive element (40, 44; 72; 82; 114; 122) in contact with all the first terminals (12; 104) of the accumulators of the first group and with all the second terminals (14; 106) of the accumulators of the second group.

14. The method of claim 13, comprising the steps of:
placing the electric connection device (30) against the accumulators (10);
preventing the removal of the electric connection device; and
introducing the device into a package (39), the package applying the electric connection device against the accumulators (10) to compress the resiliently deformable element (44) .

15. A method of disassembling the battery module of any of claims 1 to 12, comprising taking the electric connection device (30; 50; 60; 70; 80; 110; 120) away from the accumulators (10; 102) to release the resiliently deformable element (44; 72; 82; 114; 124) and taking the electrically-conductive element (40, 44; 72; 82; 114; 122) away from all the first terminals (12; 104) of the accumulators of the first group and all the second terminals (14; 106) of the accumulators of the second group.
